# EUROPEAN PATENT SPECIFICATION

(11) **EP 2 447 413 B1**
(45) Date of publication and mention of the grant of the patent: **17.04.2013**
(21) Application number: 11186573.9
(22) Date of filing: 25.10.2011
(51) Int. Cl.: D21B 1/32

(54) **Paper recycling method**
Verfahren zur Wiederverwertung von Papier
Méthode de recyclage de papier

(30) Priority: 26.10.2010 GB 201018060
(43) Date of publication of application: 02.05.2012
(73) Proprietor: Office2Office plc, Norwich, Norfolk NR3 1PD (GB)
(72) Inventor: Craig, Andrew Ian, Winchester, Hants SO22 5QB (GB)
(74) Representative: Hill, Christopher Michael

(56) References cited:
- EP-A1- 2 224 057
- US-A1- 2009 178 774

## Description

The present invention concerns an improved method for recycling paper. The process is particularly advantageous, since it allows entities that wish to recycle paper to obtain recycled paper that is formed from their own waste. This provides a heightened incentive for companies and other individuals to recycle, since they are able to receive the product of their own recycling, and see the direct result and benefit of their efforts. This leads to increases in recycling within the sector, with the clear benefit to the environment that this brings.

Recycling is desirable, not only for environmental and sustainability reasons, but also because it maximises the efficiency of use of limited resources, which has a clear economic benefit for all. Recycled paper is typically formed from waste paper that is collected from homes, offices and other sources in various different schemes. These typically include governmental schemes funded by the state to promote recycling for the benefit of the environment, or by private enterprise which may be interested in the business opportunity that recycling affords.

Recycled paper is formed in a typical paper-making process, with the exception that the feedstock is re-pulped waste paper rather than virgin pulp (although some virgin pulp may be added in certain cases). Steps may need to be taken to remove undesirable impurities that are present in the waste feedstock, and to remove ink or other materials that are present in the used paper forming the feedstock.

Generally, there are three categories of feedstock for making recycled paper. These include mill broke, pre-consumer waste, and post-consumer waste. Mill broke contains paper scrap from the manufacture of paper. Pre-consumer waste contains material which has been discarded before it was ready for consumer use.

Post-consumer waste contains material discarded after consumer use, such as newspaper, office waste, and residential waste. Typically post-consumer waste is collected in government schemes which are not selective - waste from individual entities is mixed together and taken in large batches for processing. Whilst this may be cost effective, it de-couples the consumer from his or her waste -recycled paper that the consumer might purchase can come from any source. Currently, no scheme is in place which would re-connect the consumer with his or her own waste, despite the incentives to recycling that such feelings of ownership would bring.

The need is especially acute in an office environment, where use of paper can be high, and the feeling of connection with the waste can be low.

EP 2 224 057 A1 discloses a method for recycling paper using a small-sized waste paper recycling apparatus of furniture size installed at the site of origin of the waste paper for recycling and processing the waste paper into re-usable paper at the same site, without disposing or discarding the discharged used paper.

US 2009/01178774 A1 discloses a method of recycling paper in which used office paper is collected from an office or a suite of offices in an office building and then recycled into new office paper using a device located in the same office or suite of offices, or within the same office building from which the used paper is collected, the device being of a size similar to that of a typical copy machine.

The present invention aims to address the problems set out above in known recycling methods and systems. Accordingly, the present invention aims to provide a recycling system that is capable of collecting waste paper from a particular entity, and delivering to that entity recycled paper that is formed from its own waste.

Accordingly, the present invention provides a method for recycling paper, which method comprises:
(a) obtaining post-consumer waste paper;
(b) tagging the waste paper such that a first entity is associated with the waste paper, wherein tagging is carried out by attaching a label to the waste paper;
(c) recycling the waste paper to produce recycled paper; and
(d) tagging the recycled paper such that a second entity is associated with the recycled paper, wherein tagging is carried out by attaching a label to the recycled paper;
wherein, in step (c) the recycling process is conducted such that the recycled paper contains no waste paper that is not associated with the first entity.

In the context of the present invention, the first and second entities can be any entity. Thus they may be one or more consumers, such as companies and/or private individuals. The entities are preferably companies, or government entities such as government departments, since it is preferred that office waste paper is used. Office waste paper is preferable, since it is not mixed with food products and other domestic waste, which may make the recycled paper seem undesirable to the consumer (even though such waste would be removed before processing and would not in any case be present in the recycled paper). The company may also be a specialist recycling company that collects (or arranges collection) of the waste paper, and sells the recycled paper (or arranges selling) back to the entities from which it was collected.

Thus, the natures of the entities in the present invention are not especially limited. However, in typical embodiments the first and second entities are the same, typically a specialist recycling company.

The method of the present invention is not especially limited and any steps may be used to produce the paper, provided that it is of acceptable quality, and does not contain any waste paper not associated with the first entity. In some embodiments of the invention, before recycling the waste paper, the recycling apparatus is stopped and cleaned so as to remove any waste paper that is not associated with the first entity. In addition to this, or as an alternative, before recycling the waste paper, the machinery is run to remove foreign paper from the apparatus, to ensure that it is rejected from the finished product. Typically some 5 to 10 tonnes of waste paper may be produced at this changeover and this is returned as feedstock for making other customers' paper.

In some embodiments, the volume and/or the weight of the waste paper (and/or the recycled paper) is recorded in addition to tagging.

The invention will now be explained in more detail, by way of example only, with reference to the following Figure.

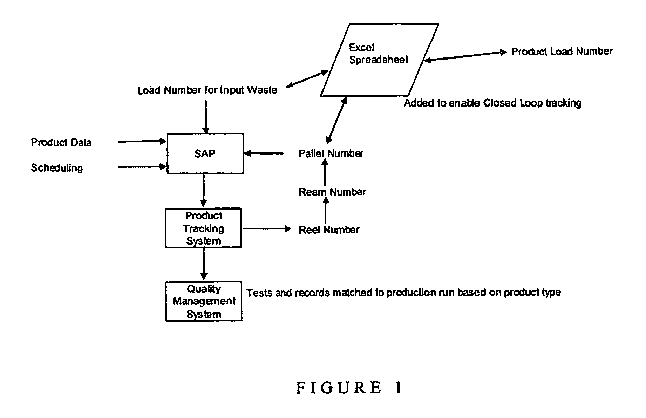

Figure 1 shows typical Banner™ waste paper, segregated on arrival at the recycling plant - at least one bale from each load is tagged to enable tracking. With the addition of a simple Excel spreadsheet existing systems are capable of tracking the input waste through to pallets of finished product. A combination of SAP, Product Tracking and Quality Management systems provide full traceability and quality assurance.

The invention will now be described in further detail.

As has been mentioned above, the waste paper consists of post-consumer waste paper. In some embodiments, the waste paper consists of office waste paper.

As has been mentioned, the method of producing the recycled paper is not especially limited and any known method may be employed. In some embodiments the method includes one or more of the following steps:
(e) sorting the waste paper starting material;
(f) pulping the waste paper starting material to form a paper pulp;
(g) removing impurities from the paper pulp;
(h) decolourising and/or de-inking the paper pulp; and
(i) forming the recycled paper from the pulp.

In some embodiments a sorting step may be avoided entirely, and so step (e) may be optional. Therefore in one embodiment the method of the invention may comprise all of steps (f) to (i) and optionally step (e).

In other embodiments all of steps (e) to (i) are employed. When step (e) is carried out it may be employed in order to control the recycled paper such that it has a desired whiteness (e.g. by including a larger or smaller quantity of brown paper fibres). The desired whiteness is not especially limited, and may be selected according to the use to which the recycled paper will be put. In some embodiments, the desired whiteness is from 65-100 ±2.5, or 70-100 ±2.5, in accordance with ISO 11475, more preferably wherein the desired whiteness is 70±2.5, 75±2.5, 80±2.5, 85±2.5, 90±2.5, 95±2.5 or 100±2.5 in accordance with ISO 11475.

In step (f), the method of pulping is not especially limited, and any method typically employed in known paper recycling methods may be used. In some embodiments, in step (f) the paper pulp formed has a pulp consistency of 10% or above, more preferably 15% or above, and more preferably still 20% or above.

In step (g), the method of removing impurities is not especially limited, and any method typically employed in known paper recycling methods may be used, to remove whatever impurities are present. This will depend on the nature of the waste. In some embodiments, in step (g) the impurities comprise one or more impurities selected from discoloured fibres, staples, plastic such as polyethylene, adhesive labels, dirt, glass, and other non-paper-based materials.

In some embodiments step (g) comprises a method of screening. The type of screening employed is not especially limited, and any method typically employed in known paper recycling methods may be used. In some embodiments, screening is carried out at a pulp consistency of 0.1-5%, more preferably from 0.4-3.0%, more preferably from 0.5-1.0% and/or from 2-2.8%. In some embodiments screening may be optimized to remove discoloured fibres, such as brown fibres.

In step (h), the method of decolourising and/or de-inking is not especially limited, and any method typically employed in known paper recycling methods may be used. In some embodiments, step (h) comprises one, other, or both of the decolourising step and the deinking step. In some embodiments step (h) comprises a decolourising step and/or a de-inking step, which does not employ a brightening agent. In other embodiments step (h) comprises a decolourising step and/or a de-inking step, which does employ a brightening agent. The brightening agent is not especially limited. However, in typical embodiments, the brightening agent is an agent that is not harmful to the environment. The brightening agent is typically employed to ensure that the recycled paper has a desired brightness. The desired brightness of the paper is not especially limited, and may be selected according to the use to which the recycled paper will be put. In some embodiments, the desired brightness is from 65-100% ±2.5%, or 70-100% ±2.5%, in accordance with ISO 2470, more preferably the brightness is 70%±2.5%, 75%±2.5%, 80%±2.5%, 85%±2.5%, 90%±2.5, 95%±2.5% or 100%±2.5% in accordance with ISO 2470. In some embodiments the brightening agent comprises hydrogen peroxide and/or sulphur dioxide. Typically the hydrogen peroxide is employed in a quantity that is not harmful to the environment, and may be employed in a concentration of 1% by weight, or less, more preferably about 0.8% by weight. Typically, sulphur dioxide is employed as a brightening agent where brightness of 85% or more is desired, for example brightnesses of 85%±2.5%. 90%±2.5, 95%±2.5% or 100%±2.5%.

In step (i), the method of forming recycled paper from the pulp is not especially limited, and any method typically employed in known paper recycling methods may be used. In some embodiments, step (i) comprises forming a web of wet paper and then drying the web to form the recycled paper.

In some embodiments of the present invention no virgin fibre is added to the waste paper starting material during the method. This ensures that the final recycled paper is formed entirely from waste paper, and reduces the environmental impact.

As has been mentioned above, the purpose of the recycled paper produced is not especially limited. Typically, but not exclusively, it is paper suitable for office use. In certain embodiments it is suitable for use in photocopying, printing such as inkjet printing and laser printing, and/or typing. As has been mentioned, the desired whiteness of the paper is not especially limited, provided that the paper is of acceptable quality. The whiteness may be selected according to the use to which the recycled paper will be put. In some embodiments, the desired whiteness is from 65-100 ±2.5, or 70-100 ±2.5, in accordance with ISO 11475, more preferably wherein the whiteness is 70±2.5, 75±2.5, 80±2.5, 85±2.5, 90±2.5, 95±2.5 or 100±2.5 in accordance with ISO 11475.

Similarly, the desired brightness of the paper is not especially limited, and may be selected according to the use to which the recycled paper will be put. In some embodiments, the desired brightness is from 65-100% ±2.5%, or 70-100% ±2.5%, in accordance with ISO 2470, more preferably wherein the brightness is 70%±2.5%, 75%±2.5%, 80%±2.5%, 85%±2.5%, 90%±2.5, 95%±2.5% or 100%±2.5% in accordance with ISO 2470.

In some embodiments, the recycled paper is formed without employing an optical brightening agent. In typical embodiments, the brightening agent is an agent that is not harmful to the environment. In some embodiments the brightening agent comprises hydrogen peroxide. Typically the hydrogen peroxide is employed in a quantity that is not harmful to the environment, and may be employed in a concentration of 1% by weight, or less.

The provenance of the recycled paper is particularly important to some individuals. As mentioned above, some persons prefer to receive their own waste paper back in recycled form. In some instances this encourages recycling by developing a feeling of ownership. Therefore, in the present invention, it is necessary to ensure that the source of the waste paper from which the recycled paper is produced is recorded. In one preferred embodiment, a unique identifier (such as a consignment note) is issued for each load of bales of recovered paper delivered to the paper mill; upon arrival, the material is re-weighed at consignment or batch level, and a unique label for each batch and/or consignment is securely fixed to each bale. The bales are subsequently unloaded and stored in a segregated storage area. They may remain there until a new production run of finished paper commences. Consequently, each production batch records which paper consignments were used in the manufacture, and from which original recycling location they came. The owner of the waste may then receive his or her own waste paper back in recycled form.

The invention will now be explained further with reference to the following non-limiting specific embodiments, which are provided by way of example only.

### EXAMPLES

### Example 1 ― Recycling government office paper

Waste paper is collected from government offices by a recycling company. No initial sorting is carried out. The waste paper comprises substantially all office waste paper and consists entirely of post-consumer waste. The paper is then transported to the mill for processing. Before processing, the paper is stored by the mill in such a manner that the paper is kept separate from other waste paper so as not to contaminate it with other waste. The paper is tagged, so that the government offices from which the waste originates can be identified.

The paper recycling apparatus in the recycling plant is stopped and cleaned to remove any waste paper (or recycled paper) that is from a different source.

Optionally, before processing, the paper is sorted into batches for forming papers having differing desired whiteness -typically four batches are employed for forming paper having whiteness of 70, 80, 90 and 100 (ISO 11475). Then the waste is processed through the newly cleaned apparatus.

Water is added to the waste and then the waste is pulped. This process is performed in a large vessel, known as a 'pulper'. The waste paper starting material is diluted with up to 100 times its weight in water and then subjected to mechanical mixing using rotor blades.

The stock is then screened. It is 'slushed' into a pulp consistency of 20% or above and large non-fibrous contaminants are removed (for example staples, plastic such as polyethylene, adhesive labels, glass etc.). The resulting pulp is further filtered and screened to remove further impurities.

The printing inks are then removed to increase whiteness and purity (de-inking). The fibres are progressively cleaned and the ink removed in a flotation process where air is blown into the solution. The ink adheres to bubbles of air and rises to the surface from where it is separated.

Subsequent to this process, the stock may be brightened, and further additives introduced. The stock is then transferred to a papermaking apparatus, to make paper.

To make paper, more water is added to produce a fibre suspension of as little as 1-10 parts fibre to 1000 parts water. The resulting suspension is sprayed through a thin, horizontal slit on to a moving wire mesh. The water is then removed using gravity and suction in a process known as sheet formation. The fibres spread and consolidate into a thin mat, which is a web of wet paper. This web of wet paper is then lifted from the wire mesh and squeezed between a series of presses where its water content is lowered to about 50%. It then passes around a series of cylinders, heated to temperatures in excess of 100°C, where drying takes place. Here the water content is lowered to between 5% and 8%.

After drying, some papers may also undergo surface treatments e.g. sizing and calendaring - a process consisting of smoothing the surface of the paper to produce a glazed or glossy appearance. The paper is then wound into a reel, and cut and appropriately packaged for delivery.

It is tagged and stored in a location separate from other recycled paper to avoid contamination. It is then delivered to the original government department, or to a recycling company operating on behalf of the department.

## Claims

1. A method for recycling paper, which method comprises:
(a) obtaining post-consumer waste paper;
(b) tagging the waste paper such that a first entity is associated with the waste paper, wherein tagging is carried out by attaching a label to the waste paper;
(c) recycling the waste paper to produce recycled paper ;
(d) tagging the recycled paper such that a second entity is associated with the recycled paper, wherein tagging is carried out by attaching a label to the recycled paper;
wherein, in step (c) the recycling process is conducted such that the recycled paper contains no waste paper that is not associated with the first entity.

2. A method according to claim 1, wherein the first and second entities are the same,
and/or wherein in step (c), before recycling the waste paper, the recycling apparatus is stopped and cleaned so as to remove any waste paper that is not associated with the first entity,
and/or wherein the waste paper consists of office waste paper,
and/or wherein the recycled paper is formed without employing an optical brightening agent.

3. A method according to any preceding claim, which method includes one or more of the following steps:
(e) sorting the waste paper starting material;
(f) pulping the waste paper starting material to form a paper pulp;
(g) removing impurities from the paper pulp;
(h) decolourising and/or de-inking the paper pulp; and
(i) forming the recycled paper from the pulp.

4. A method according to claim 3 which comprises all of steps (f) to (i) and optionally step (e),
and/or wherein in step (e) sorting is carried out in order to control the recycled paper such that it has a desired whiteness, preferably wherein the desired whiteness is from 65-100 ±2.5, or 70-100 ±2.5, in accordance with ISO 11475, more preferably wherein the desired whiteness is 70±2.5, 75±2.5, 80±2.5, 85±2.5, 90±2.5, 95±2.5 or 100±2.5 in accordance with ISO 11475,
and/or wherein in step (f) the paper pulp formed has a pulp consistency of 10% or above, more preferably 15% or above, more preferably still 20% or above,
and/or wherein in step (g) the impurities comprise one or more impurities selected from discoloured fibres, staples, plastic such as polyethylene, adhesive labels, dirt, glass, and other non-paper-based materials,
and/or wherein step (g) comprises a method of screening, preferably wherein screening is carried out at a pulp consistency of 0.1-5%, more preferably from 0.4-3.0%, more preferably from 0.5-1.0% and/or from 2-2.8%, and/or preferably wherein screening is optimized to remove discoloured fibres, such as brown fibres,
and/or wherein step (h) comprises one or both of the decolourising step and the deinking step,
and/or wherein step (h) comprises a decolourising step and/or a de-inking step, which does not employ a brightening agent, or alternatively wherein step (h) comprises a decolourising step and/or a de-inking step, which does employ a brightening agent, preferably wherein the brightening agent is employed in order to control the recycled paper such that it has a desired brightness of from 65-100% ±2.5%, or 70-100% ±2.5%, in accordance with ISO 2470, more preferably wherein the brightness is 70%±2.5%, 75%±2.5%, 80%±2.5%, 85%±2.5%, 90%t2.5, 95%±2.5% or 100%±2.5% in accordance with ISO 2470, preferably wherein the brightening agent comprises hydrogen peroxide, preferably wherein the hydrogen peroxide is employed in a concentration of 1% by weight, or less, and/or wherein the brightening agent comprises sulphur dioxide, preferably wherein sulphur dioxide is employed as a brightening agent where a brightness of 85% or more is desired,
and/or wherein step (i) comprises forming a web of wet paper and then drying the web to form the recycled paper.

5. A method according to any preceding claim, wherein no virgin fibre is added to the waste paper starting material during the method.

6. A method according to any preceding claim, wherein the recycled paper comprises paper suitable for office use.

7. A method according to claim 6, wherein the recycled paper is suitable for use in photocopying, printing such as laser printing and/or inkjet printing, and/or typing.

## Patentansprüche

1. Verfahren zum Wiederverwerten von Papier, welches Verfahren umfasst:
(a) Erhalten von Post-Verbraucher-Altpapier;
(b) Markieren des Altpapiers, so dass eine erste Entität mit dem Altpapier assoziiert ist, wobei ein Markieren ausgeführt wird, indem eine Markierung an das Altpapier angeheftet wird;
(c) Wiederverwerten des Altpapiers, um wiederverwertetes Papier herzustellen;
(d) Markieren des wiederverwerteten Papiers, so dass eine zweite Entität mit dem wiederverwerteten Papier assoziiert ist, wobei ein Markieren ausgeführt wird, indem eine Markierung an das wiederverwertete Papier angeheftet wird;
wobei in Schritt (c) das Wiederverwertungsverfahren derart ausgeführt wird, dass das wiederverwertete Papier kein Altpapier, das nicht mit der ersten Entität assoziiert ist, enthält.

2. Verfahren nach Anspruch 1, wobei die ersten und zweiten Entitäten die gleichen sind und/oder wobei in Schritt (c) vor dem Wiederverwerten des Altpapiers die Wiederverwertungsapparatur angehalten und gereinigt wird, um jegliches Altpapier, das nicht mit der ersten Entität assoziiert ist, zu entfernen,
und/oder wobei das Altpapier aus Büro-Altpapier besteht
und/oder wobei das wiederverwertete Papier gebildet wird, ohne einen optischen Aufheller einzusetzen.

3. Verfahren nach einem der vorangegangenen Ansprüche, welches Verfahren einen oder mehrere der folgenden Schritte umfasst:
(e) Sortieren des Altpapier-Ausgangsmaterials;
(f) Aufschließen des Altpapier-Ausgangsmaterials, um einen Papierbrei zu bilden;
(g) Entfernen von Verunreinigungen aus dem Papierbrei;
(h) Entfärben des und/oder Entfernung von Tinte aus dem Papierbrei(s); und
(i) Bilden des wiederverwerteten Papiers ausgehend von dem Brei.

4. Verfahren nach Anspruch 3, welches alle der Schritte (f) bis (i) und gegebenenfalls Schritt (e) umfasst
und/oder wobei in Schritt (e) ein Sortieren ausgeführt wird, um das wiederverwertete Papier derart zu steuern, dass es eine gewünschte Weiße aufweist, wobei die gewünschte Weiße gemäß ISO 11475 vorzugsweise 65-100 ± 2,5 oder 70-100 ± 2,5 beträgt, wobei die gewünschte Weiße gemäß ISO 11475 mehr bevorzugt 70 ± 2,5, 75 ± 2,5, 80 ± 2,5, 85 ± 2,5, 90 ± 2,5, 95 ± 2,5 oder 100 ± 2,5 beträgt,
und/oder wobei in Schritt (f) der gebildete Papierbrei eine Papierbreikonsistenz von 10% oder darüber, mehr bevorzugt 15% oder darüber, noch mehr bevorzugt 20% oder darüber aufweist
und/oder wobei in Schritt (g) die Verunreinigungen eine oder mehrere Verunreinigungen, ausgewählt aus verfärbten Fasern, Klammern, Kunststoff, wie Polyethylen, Klebeetiketten, Schmutz, Glas und anderen, nicht auf Papier basierenden Materialien, umfassen
und/oder Schritt (g) ein Sichtungsverfahren umfasst, wobei eine Sichtung vorzugsweise bei einer Papierbreikonsistenz von 0,1-5%, mehr bevorzugt von 0,4-3,0%, mehr bevorzugt von 0,5-1,0% und/oder von 2-2,8% ausgeführt wird und/oder wobei eine Sichtung vorzugsweise optimiert wird, um verfärbte Fasern, wie braune Fasern, zu entfernen,
und/oder wobei Schritt (h) einen oder beide des Entfärbungsschritts und des Tintenentfernungsschritts umfasst
und/oder wobei Schritt (h) einen Entfärbungsschritt und/oder einen Tintenentfernungsschritt, weicher keinen Aufheller einsetzt, umfasst oder wobei Schritt (h) alternativ einen Entfärbungsschritt und/oder einen Tintenentfernungsschritt, welcher einen Aufheller einsetzt, umfasst, wobei der Aufheller vorzugsweise eingesetzt wird, um das wiederverwertete Papier derart zu steuern, dass es eine gewünschte Helligkeit gemäß ISO 2470 von 65-100% ± 2,5% oder 70-100% ± 2,5% aufweist, wobei die Helligkeit gemäß ISO 2470 mehr bevorzugt 70% ± 2,5%, 75% ± 2,5%, 80% ± 2,5%, *85% ± 2,5%, 90% ± 2,5%, 95% ± 2,5% oder 100% ± 2,5% beträgt, wobei der Aufheller vorzugsweise Wasserstoffperoxid umfasst, wobei das Wasserstoffperoxid vorzugsweise in einer Konzentration von 1 Gew.-% oder weniger eingesetzt wird, und/oder wobei der Aufheller Schwefeldioxid umfasst, wobei Schwefeldioxid vorzugsweise als ein Aufheller eingesetzt wird, wenn eine Helligkeit von 85% oder mehr gewünscht wird,
und/oder wobei Schritt (i) umfasst, eine Bahn von nassem Papier zu bilden und die Bahn dann zu trocknen, um das wiederverwertete Papier zu bilden,

5. Verfahren nach einem jeglichen vorangegangenen Anspruch, wobei zu dem Altpapier-Ausgangsmaterial während des Verfahrens keine neuen Fasern hinzugefügt werden.

6. Verfahren nach einem jeglichen vorangegangenen Anspruch, wobei das wiederverwertete Papier für eine Verwendung im Büro geeignetes Papier umfasst.

7. Verfahren nach Anspruch 6, wobei das wiederverwertete Papier für eine Verwendung beim Photokopieren, Drucken, wie Laserdrucken und/oder Tintenstrahldrucken, und/oder Schreiben mittels Schreibmaschine geeignet ist.

## Revendications

1. Procédé de recyclage du papier, procédé qui comprend :
(a) l'obtention de vieux papiers de rebut ;
(b) le marquage des vieux papiers de telle sorte qu'une première entité soit associée aux vieux papiers, le marquage étant effectué en fixant une étiquette aux vieux papiers;
(c) le recyclage des vieux papiers pour produire du papier recyclé;
(d) le marquage du papier recyclé de telle sorte qu'une seconde entité soit associée au papier recyclé, le marquage étant effectué en fixant une étiquette au papier recyclé ;
dans l'étape (c), le procédé de recyclage étant mis en oeuvre de telle sorte que le papier recyclé ne contienne pas de vieux papiers qui ne sont pas associés à la première entité.

2. Procédé suivant la revendication 1, dans lequel les première et seconde entités sont identiques,
et/ou dans lequel, dans l'étape (c), avant le recyclage des vieux papiers, l'appareil de recyclage est arrêté et nettoyé de manière à éliminer tous les vieux papiers qui ne sont pas associés à la première entité,
et/ou dans lequel les vieux papiers consistent en vieux papiers de travail de bureau,
et/ou dans lequel le papier recyclé est formé sans utiliser d'azurant optique.

3. Procédé suivant l'une quelconque revendications précédentes, procédé qui comprend une ou plusieurs des suivantes :
(e) tri des vieux papiers servant de matière départ ;
(f) trituration des vieux papiers servant de matière de départ pour former une pâte à Papier ;
(g) élimination des impuretés de la pâte à papier ;
(h) décoloration et/ou désencrage de la pâte à papier ; et
(i) formation du papier recyclé à partir de la pâte.

4. Procécé suivant la revendication 3, qui comprend la totalité des étapes (f) à (i) et facultativement l'étape (e),
et/ou dans lequel, dans l'étape (e), le tri est effectué à des fins d'ajustement du papier recyclé de telle sorte qu'il ait une blancheur désiré, de préférence dans lequel la blancheur désirée est égale à 65-100 + 2,5, ou 70-100 ± 2,5, suivant la norme ISO 11475, plus avantageusement dans lequel la blancheur désirée est égale à 70 ± 2,5, 75 ± 2,5, 80 ± 2,5, 85 ± 2,5, 90 ± 2,5, 95 ± 2,5 ou 100 ± 2,5 suivant la norme ISO 11475,
et/ou dans lequel, dans l'étape (f), la pâte à papier formée a consistance de pâte égale ou supérieure à 10 %, plus avantageusement égale ou supérieurs à 15 %, mieux encorne égale ou supérieure à 20 %,
et/ou dans lequel, dans l'étape (g), les impuretés comprennent une ou plusieurs impuretés choisies entre des fibres décolorées, des agrafes, une matière plastiqué telle que le polyéthylène, des étiquettes adhésives, la poussière, du verre et d'autres matières non à base de papier,
et/ou dans lequel l'étape (g) comprend un procédé de tamisage, avantageusement dans lequel le tamisage est effectué à une consistance de la pâte de 0,1 à 5 %, plus avantageusement de 0,4 à 3,0 %, miteux encre de 0,5 à 1,0 % et/ou de 2 à 2,8 %, et/ou de préférence dans lequel le tamisage est optimisé pour éliminer les fibres décolorées, telles que les fibres, brunes,
et/ou dans lequel l'étape (h) comprend l'une des ou les deux étapes consistant en l'étape de décoloration et l'étape de désencrage,
et/ou dans lequel l'étape (h) comprend une étape de décoloration et/ou une étape de désencrage, qui n'utilise pas d'azurant, ou bien dans lequel l'étape (h) comprend une étape de décoloration et/ou une étape de désencrage, qui utilise un azurant, de préférence dans lequel l'azurant est utilise afin d'ajuster le papier recyclé de telle sorte qu'il ait une brillance désirée égale à 65-100 % ± 2,5 % ou 70-100 ± 2,5 %, suivant la norme ISO 2470, plus avantageusement dans lequel la brillance est égale à 70 % ± 2,5 %, 75 % ± 2,5 %, 80 % ± 2,5 %, 85 % ± 2,5 %, 90 % ± 2,5 %, 95 % ± 2,5 % ou 100 ± 2,5 %, suivant la norme ISO 2470, de préférence dans lequel l'azurant comprend du peroxyde d'hydrogène, de préférence dans lequel le peroxyde d'hydrogène est utilisé à une concentration égale ou inférieure 1 % en poids, et/ou dans lequel l'azurant comprend du bioxyde du soufre, de préférence dans lequel le bioxyde de soufre est utilise comme azurant lorsqu'une brillante égale ou supérieure à 85 % est désirée,
et/ou dans lequel l'étape (i) comprend la formation d'une bande de papier humide et ensuite le séchage de la bande pour former le Papier recyclé.

5. Procédé suivant l'une quelconque des revendications précédentes, dans lequel aucune fibre vierge n'est ajoutée aux vieux papiers servant de matière de départ au cours du procédé.

6. Procédé suivant l'une quelconque des revendications précédentes, dans lequel le papier recyclé comprend du papier destiné aux travaux de bureau.

7. Procédé suivant la revendication 6, dans lequel le papier recyclé convient à l'utilisation pour le photocopiage, une impression telle que l'impression par laser et/ou l'impression par jet d'encre et/ou la dactylographié.
